# FASCICULE DE BREVET EUROPEEN

(11) **EP 0 794 914 B1**
(45) Date de publication et mention de la délivrance du brevet: **22.07.1998**
(21) Numéro de dépôt: 95943249.3
(22) Date de dépôt: 20.12.1995
(51) Int. Cl.: B65G 17/38

(54) **DISPOSITIF DE SUPPORT DE PREFORME**
HALTEVORRICHTUNG FÜR VORFORMLINGE
PREFORM SUPPORT DEVICE

(30) Priorité: 22.12.1994 FR 9415471
(43) Date de publication de la demande: 17.09.1997
(73) Titulaire: SIDEL, F- 76053 Le Havre Cedex (FR)
(72) Inventeur: EVRARD, Alain, F-76610 Le Havre (FR)
(74) Mandataire: Gorree, Jean-Michel
(86) Numéro de dépôt international: FR9501701
(87) Numéro de publication internationale: WO9619401

(56) Documents cités:
- FR-A- 1 403 295
- FR-A- 1 452 213
- US-A- 2 646 160

## Description

La présente invention concerne des perfectionnements apportés aux dispositifs de support de préforme agencés pour être associés avec une multiplicité de dispositifs analogues accouplés avec articulation les uns à la suite des autres en une chaîne sans fin de transfert de préformes avec rotation simultanée de celles-ci sur elles-mêmes, chaque dispositif comportant :
- une platine munie de moyens d'accouplement avec articulation avec deux autres platines adjacentes situées respectivement en avant et en arrière (dans le sens de déplacement de la chaîne) ;
- un corps fixé sur ladite platine ; et
- une tige supportée par ledit corps à libre rotation avec possibilité de déplacement axial, ladite tige ayant une extrémité de préhension conformée pour être solidarisée de façon amovible avec l'extrémité ouverte d'une préforme
- les susdits moyens d'accouplement comportant :
   . à une première extrémité de la platine, une queue de liaison supportant une tête d'accouplement en calotte sphérique destinée à prendre appui sur la platine adjacente située du côté de cette première extrémité, et
   . à une seconde extrémité, un siège en forme de zone sphérique de forme complémentaire de la susdite calotte et munie d'une ouverture axiale centrale pour le libre passage de la queue de liaison de la platine adjacente située du côté de cette seconde extrémité.

Une chaîne de transfert de préformes constituée de tels dispositifs se rencontre notamment dans les installations de fabrication de récipients, tels que bouteilles, flacons ou analogues, constitués en une matière plastique, notamment une matière thermoplastique telle que le polyéthylènetérephtalate (PET). Plus particulièrement, une chaîne de transfert ainsi constituée est utilisée pour déplacer les préformes depuis un poste de chargement jusqu'à et à travers un four de chauffage (four tunnel) dans lequel le matériau constitutif des préformes est chauffé pour être ensuite moulé, par un processus de soufflage ou d'étirage-soufflage, en un récipient de grande dimension (récipient définitif ou récipient intermédiaire). La chaîne de transfert est en outre agencée pour que le déplacement linéaire des préformes s'accompagne d'une rotation des préformes sur elles-mêmes de façon que le matériau soit chauffé de façon homogène sur tout le pourtour des préformes, les moyens de chauffage étant disposés unilatéralement dans le four.

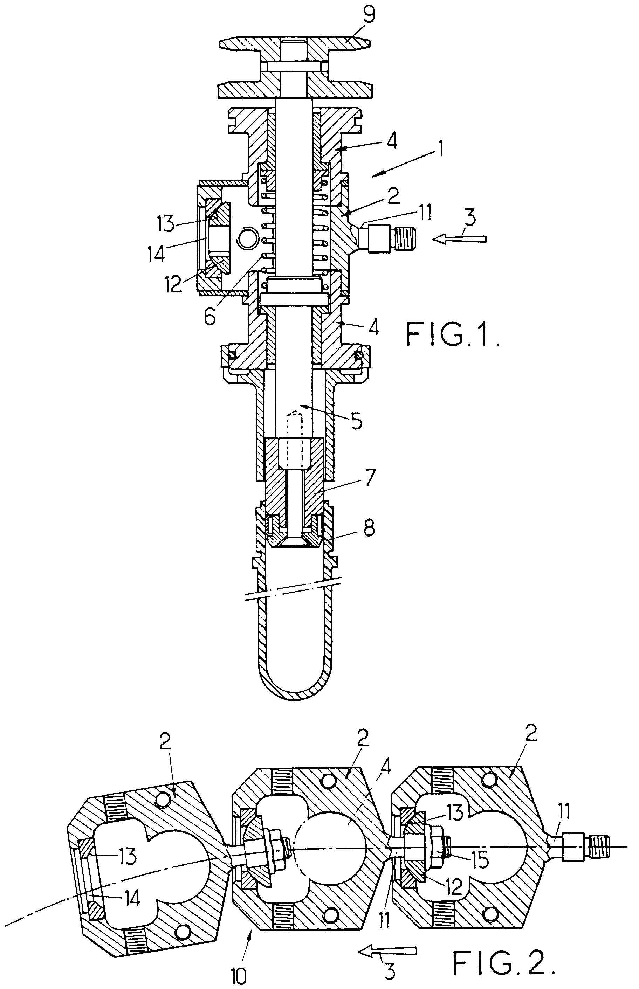

La figure 1 des dessins annexés représente, en coupe diamétrale, de façon relativement détaillée, un dispositif de support de préforme agencé selon la technique habituelle, tandis que la figure 2 montre, en vue de dessus, sous forme simplifiée les parties d'accouplement (fraction de la chaîne de transfert) d'un groupe de trois dispositifs selon la figure 1.

Le dispositif de support de préforme, désigné sans son ensemble par la référence 1, comporte :
- une platine évidée 2 munie de moyens d'accouplement avec articulation avec deux autres platines adjacentes situées respectivement en avant et en arrière (dans le sens (flèche 3) de déplacement de la chaîne de transfert) ;
- un corps creux 4 fixé sur la platine 2 ; ici le corps 4 est constitué en deux parties, respectivement supérieure et inférieure, fixées dans la platine 2, par exemple respectivement par vissage par le dessus et par le dessous de la platine ;
- et une tige 5 supportée à libre rotation dans le corps creux 4 ; des chemises (représentées, mais non référencées) intérieures au corps 4 assurent le guidage de la tige ; en outre la tige est apte à être déplacée axialement avec rappel au moyen d'un ressort 6.

A son extrémité libre (en bas sur la figure 1), la tige 5 est munie d'une tête de préhension 7 agencée pour être solidarisée de façon amovible ou relâchable avec l'extrémité ouverte d'une préforme 8 (sur le dessin, la tête de préhension 7 est enfoncée à friction à l'intérieur de l'ouverture de la préforme 8).

A son extrémité opposée (en haut sur la fig. 1), la tige 5 est solidaire d'une roue dentée 9 apte à engrener avec une chaîne à maillons (du type chaîne Galle) qui s'étend de façon fixe le long de la trajectoire suivie par la chaîne de transfert, ce grâce à quoi la tige 5, et donc la préforme 8 qu'elle supporte, est mise en rotation sur elle-même quand la chaîne de transfert est en mouvement selon la flèche 3.

Le déplacement axial de la tige 5 est obtenu au moyen d'une came (non montrée) amenée sous la roue dentée 9.

La multiplicité des dispositifs de support de préforme accouplés les uns à la suite des autres forme une chaîne sans fin de transfert 10 (dont un fragment est schématisé à la figure 2) qui doit posséder une capacité d'articulation, notamment, mais non exclusivement, dans un plan horizontal (comme schématisé à la figure 1). Mais en outre le déroulement adéquat du processus de fabrication des récipients nécessite que les préformes soient positionnées dans des attitudes différentes en divers points du transfert: en particulier elles sont chargées ouverture en haut sur les dispositifs de support 1, mais doivent être chauffées ouverture en bas dans le four, puis doivent être ramenées ouverture en haut à la sortie du four pour être transférées dans le moule. Il en résulte la nécessité que chaque dispositif de support 1 présente une aptitude à tourner, indépendamment des dispositifs encadrants avant et arrière, autour d'un axe horizontal, sous l'action de cames de guidage externes.

A ces fins, il est connu que les moyens d'accouplement de chaque dispositif de support 1 aux deux dispositifs adjacents avant et arrière comprennent :
- à l'extrémité arrière de la platine 2, une queue de liaison 11 supportant une tête d'accouplement 12 en calotte sphérique par exemple convexe à convexité tournée vers l'avant, qui est destinée à prendre appui sur la platine adjacente située en arrière,
- à l'extrémité avant de la platine 2, un siège 13 en forme de zone sphérique de forme complémentaire de la calotte sphérique, par exemple concave, et munie d'une ouverture axiale centrale 14 pour le libre passage de la queue de liaison 11 de la platine adjacente située en avant, dont la calotte sphérique convexe prend appui sur ledit siège concave.

Cet agencement connu présente certains inconvénients inhérents à la structure adoptée.

Tout d'abord, l'articulation sphérique ainsi constituée supporte, à elle seule, les efforts de traction au cours du mouvement de la chaîne de transfert, ainsi que les frottements engendrés au cours de la rotation des platines les unes par rapport aux autres aussi bien dans les courbes de la chaîne de transfert que lors de l'inversion de position des préformes. Les sièges 13 sont certes revêtus d'une couche de matériau autolubrifiant à faible coefficient de frottement, tel que du TEFLON, mais, compte tenu de l'importance des efforts qui s'exercent et des vitesses élevées de mobilité des platines les unes par rapport aux autres, cette couche est rapidement usée et les sièges 13 doivent être remis en état.

Là encore se pose un problème, car l'accès aux sièges en vue de leur réfection et/ou de leur remplacement nécessite la désolidarisation des platines accouplées. Comme représenté à la figure 2, chaque queue de liaison 11 a son extrémité munie d'un filetage et la tête d'accouplement 12 est bloquée sur la queue de liaison 11 au moyen d'un écrou 15. L'accès aux écrous 15 est étroit et mal commode. D'une façon générale, l'entretien des moyens d'accouplement nécessite une interruption du fonctionnement de l'installation qui se révèle longue compte tenu des difficultés de démontage et de remontage, et qui est donc coûteuse en raison de la perte de fabrication corrélative. Il existe donc une demande pressante de la part des utilisateurs des installations incorporant de telles chaînes de transfert pour une structure qui, tout en conservant les mêmes capacités de fonctionnement, se révèle moins sujette à usure et présente une structure plus simple facilitant le démontage et le remontage, afin de réduire le coût global inhérent à l'entretien de la chaîne. En outre, le pas entre les préformes successives, et donc entre les platines successives, est déterminé par l'ensemble de l'agencement de l'installation et a été réduit à un minimum dans les installations actuelles : il est donc nécessaire de ne pas remettre en cause cet agencement d'ensemble et de faire en sorte que les perfectionnements à apporter aux platines s'inscrivent dans les contraintes d'espaces libres préexistants.

A ces fins, un dispositif de support de préforme tel que défini au préambule se caractérise essentiellement, étant agencé conformément à l'invention, en ce que :
- la tête d'accouplement en calotte sphérique est supportée à libre rotation sur la queue de liaison,
- une plaque d'appui est solidarisée, par des moyens de solidarisation, à l'extrémité libre de la queue de liaison, cette plaque d'appui s'étendant transversalement à la queue de liaison et sensiblement parallèlement à la face de la tête d'accouplement opposée à sa face en calotte sphérique,
   et
- un roulement annulaire est interposé coaxialement à la queue de liaison entre les faces mutuellement en regard de la tête d'accouplement et de la plaque d'appui.

Avantageusement, les moyens de solidarisation de la plaque d'appui sur la queue de liaison sont agencés en vue d'une retenue axiale de ladite plaque d'appui sur ladite queue de liaison et comprennent :
- un évidement axial de contour polygonal creusé dans la face de la plaque d'appui opposée à celle portant le roulement,
- une gorge radiale creusée au voisinage de l'extrémité libre de la queue de liaison, et
- une plaque de retenue constituée en deux parties accolées bord à bord le long d'un bord d'assemblage transversal, ladite plaque de retenue présentant un contour extérieur polygonal complémentaire de celui du susdit évidement et possédant un orifice central conformé pour entourer la queue de liaison en étant engagé dans la gorge de celle-ci.

Avantageusement également, en vue d'obtenir un fonctionnement optimum du dispositif, les moyens de solidarisation de la plaque d'appui sur la queue de liaison sont agencés pour solidariser ladite plaque d'appui en rotation à ladite queue de liaison et, à cet effet, la gorge creusée dans la queue de liaison possède un contour polygonal et le contour de l'orifice central de la plaque de retenue est lui aussi polygonal et complémentaire de celui de la gorge. De préférence, le contour de la gorge de la queue de liaison est quadrangulaire rectangle, notamment carré.

Grâce à l'agencement conforme à l'invention, on sépare physiquement les deux articulations en rotation :
- l'aptitude à la rotation de la platine autour d'un axe horizontal est attribuée à l'interface avec roulement de la plaque d'appui et de la tête d'accouplement,
- l'aptitude à la rotation de la platine dans les parties courbes de la chaîne de transfert est conservée, seule, pour la tête sphérique.

La tête sphérique n'a donc plus à subir les mouvements de rotation de grande amplitude angulaire (180°) inhérents au retournement des préformes et ne subit que des mouvements de relativement faible amplitude angulaire : la couche de matériau autolubrifiant recouvrant les sièges s'use alors considérablement moins vite.

Par ailleurs, dans un mode de réalisation préféré, la plaque de retenue comporte un évidement axial creusé dans sa face la plus proche de l'extrémité libre de la queue de liaison et conformé pour recevoir l'extrémité de la queue de liaison s'étendant au-delà de la susdite gorge. Avantageusement, l'évidement creusé dans ladite face de la plaque de retenue a un contour quadrangulaire rectangle, notamment carré. Dans ce cas, il est intéressant que la face de bout de la queue de liaison, la face précitée de la plaque d'appui et la face précitée de la plaque de retenue soient approximativement coplanaires : on constitue ainsi une structure emboîtée qui non seulement n'entraîne pas d'allongement de la queue de liaison, mais peut même permettre de mettre en place un siège légèrement plus encombrant que le siège utilisé jusqu'à présent et qui présente de ce fait une surface de contact notablement accrue qui diminue la pression s'exerçant sur la couche de matériau autolubrifiant: par ce moyen également, on réduit de façon sensible la vitesse d'usure du siège.

Par ailleurs, la structure simplifiée d'assemblage des pièces sur la queue de liaison ne fait plus appel à des moyens de vissage, mais uniquement à des pièces emboîtées les unes dans les autres : on réduit les temps de démontage et de remontage dans des proportions notables.

Au total l'agencement conforme à l'invention permet d'espacer les arrêts de fonctionnement de la chaîne de transfert aux fins d'entretien et de raccourcir la durée de ces arrêts. On améliore ainsi sensiblement la rentabilité de la chaîne de transfert sans que ses caractéristiques techniques et sa fiabilité mécanique en soient amoindries.

L'invention sera mieux comprise à la lecture de la description détaillée qui suit d'un mode de réalisation préféré donné uniquement à titre d'exemple non limitatif. Dans cette description, on se réfère aux dessins annexés sur lesquels :
- la figure 3 est une vue schématique de dessus d'une platine pour un dispositif de support de préforme qui est agencée conformément à l'invention,
- la figure 4 est une vue en coupe selon la flèche IV-IV de la figure 3, et
- la figure 5 est une vue très schématique illustrant une variante d'agencement de la platine.

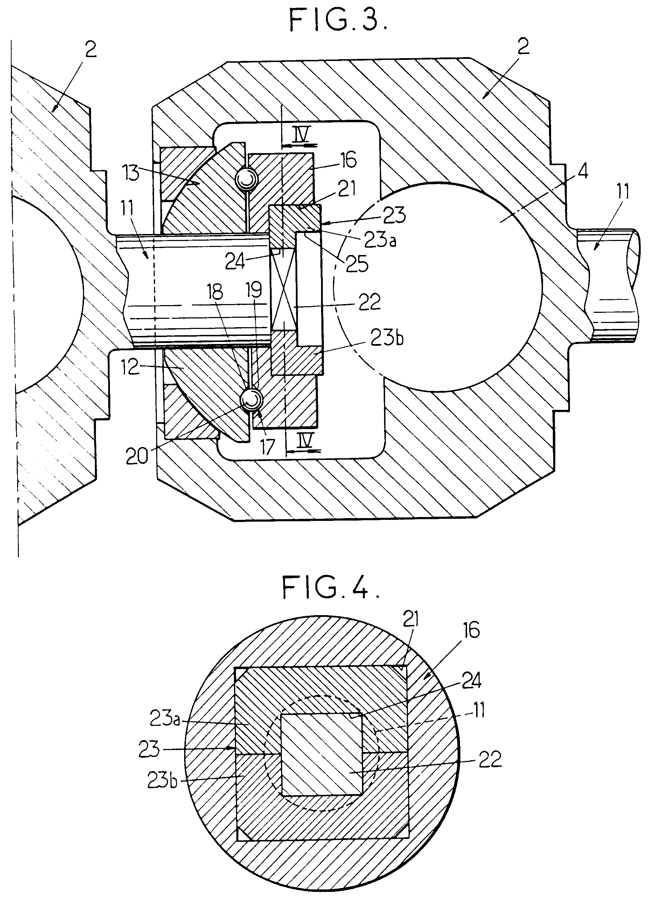

Sur les figures 3 et 4, on a repris les mêmes références numériques pour désigner les organes ou parties identiques à ceux des figures 1 et 2.

Comme visible sur la figure 3, la tête d'accouplement 12 en calotte sphérique est supportée à libre rotation sur la queue de liaison 11.

Une plaque d'appui 16 est solidarisée à l'extremité libre de la queue de liaison 11. La plaque d'appui 16 s'étend sensiblement transversalement à la queue de liaison 11 et sensiblement parallèlement à la face située côté roulement, sensiblement plane, de la tête d'accouplement 12.

Entre les faces mutuellement en regard de la tête d'accouplement 12 et de la plaque d'appui 16 est interposé un roulement annulaire 17. Ce roulement 17 peut avantageusement être constitué sous une forme très compacte, selon la direction axiale de la queue de liaison 11, en prévoyant deux gorges annulaires 18 et 19, situées face à face et de même diamètre, creusées respectivement dans les faces en regard de la tête d'accouplement 12 et de la plaque d'appui 16. Une multiplicité de billes 20 sont retenues dans lesdites gorges en étant maintenues approximativement équidistantes les unes des autres, par exemple grâce à des écarteurs (non montrés).

La plaque d'appui 16 est retenue axialement sur la queue de liaison 11. A cet effet, la face, opposée à celle portant les roulements, de la plaque d'appui 16 est creusée d'un évidement axial central 21 de contour polygonal, de préférence quadrangulaire rectangle, notamment carré.

Une gorge 22 est creusée radialement dans la queue de liaison 11, au voisinage de l'extrémité libre de celle-ci. Cette gorge 22 peut être discontinue, mais de préférence elle s'étend sur le pourtour de la queue de liaison 11 comme représenté sur la fig. 3.

Une plaque de retenue 23 est constituée de deux demi-pièces 23a et 23b accolées bord à bord le long d'un bord d'assemblage transversal. Cette plaque de retenue 23 possède un orifice central 24 conformé pour entourer étroitement le fond de la gorge 22. La plaque de retenue 23 possède un contour externe polygonal en correspondance avec le contour de l'évidement 21 précité, de manière à pouvoir s'emboîter dans celui-ci, ce contour étant de préférence quadrangulaire rectangle, notamment carré, à angles coupés comme montré à la figure 4.

En outre, en combinaison avec les dispositions qui viennent d'être exposées, on prévoit que la plaque d'appui 16 soit solidarisée en rotation à la queue de liaison 11. A cet effet, la gorge 22 creusée dans la queue de liaison 11 s'étend sur tout le pourtour de ladite queue et possède un contour polygonal, de préférence quadrangulaire rectangle, notamment carré comme cela apparaît bien sur la figure 4. De même, l'orifice central 24 de la plaque de retenue 23 en deux parties est de contour polygonal, de préférence rectangle, notamment carré.

Avantageusement, comme montré à la figure 3, la face de la plaque de retenue 23, tournée vers l'extrémité libre de la queue de liaison, est creusée, elle aussi, d'un évidement axial central 25, conformé pour recevoir l'extrémité de la queue de liaison 11 située au-delà de la gorge 22. Ainsi, la plaque d'appui 16, la plaque de retenue 23 et l'extrémité de la queue de liaison 11 sont emboîtées les unes dans les autres et de façon intéressante, pour réduire au maximum l'encombrement axial, on peut prévoir que la face de bout de la queue de liaison, la face précitée de la plaque d'appui et la face précitée de la plaque de retenue soient approximativement coplanaires.

L'agencement qui vient d'être décrit permet de conserver le même entraxe de platines qu'antérieurement, donc sans modification du reste de l'installation, tout en séparant physiquement la fonction d'articulation des platines pour épouser les courbes de la chaîne de transfert et la fonction de rotation de grande amplitude autour d'un axe horizontal. Sans accroître l'encombrement des moyens d'accouplement des platines l'une à l'autre, il devient possible d'accroître sensiblement le diamètre de la queue de liaison (accroissement de l'ordre de 50 %), ce qui augmente d'autant sa résistance mécanique à la traction. Dans le même temps, il est possible également d'accroître le rayon de courbure de la tête sphérique et du siège, cette augmentation pouvant être d'environ trois fois le rayon antérieurement adopté. Il en résulte une augmentation notable de la surface du siège, et donc, pour un effort de traction donné, une réduction sensible de la pression qui s'exerce sur la couche de matériau autolubrifiant, avec une usure considérablement diminuée de celle-ci.

L'assemblage des platines les unes à la suite des autres s'effectue de la manière suivante. On commence tout d'abord par assembler chaque tête d'accouplement sphérique 12 avec la plaque d'appui correspondante 16, avec interposition du roulement 17, l'ensemble étant maintenu assemblé provisoirement par des moyens amovibles (ruban adhésif par exemple). Un de ces ensembles est disposé à l'intérieur d'une platine 2 non équipée du corps 4 de la tige 5, puis la queue de liaison 11 d'une platine adjacente située en avant est introduite à travers l'ensemble. La platine précédente est amenée jusqu'à butée de sorte que l'extrémité libre de la queue de liaison fait saillie au-delà de la plaque d'appui. Les deux demi-parties 23a et 23b de la plaque 23 sont alors enfoncées dans la gorge 22. Puis la platine adjacente située en avant est écartée vers l'avant de manière que la plaque de retenue 23 s'emboîte dans l'évidement 21 de la plaque d'appui et que la face sphérique convexe prenne appui contre le siège concave 13, tandis que le corps 4 est monté dans la platine. Le faible jeu existant entre le corps 4 monté et la face de bout de la queue de liaison suffit à maintenir les deux platines accouplées l'une à l'autre.

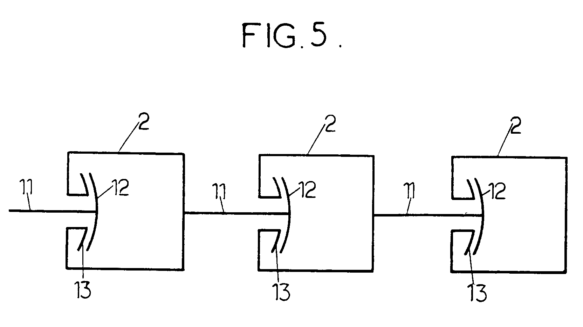

Comme il va de soi et comme il résulte déjà de ce qui précède, l'invention ne se limite nullement à ceux de ses modes d'application et de réalisation qui ont été plus particulièrement envisagés ; elle en embrasse au contraire toutes les variantes incluses dans l'étendu des revendications. En particulier, on comprendra que l'agencement représenté sur les dessins avec une tête d'accouplement 12 en calotte sphérique convexe à convexité tournée vers la platine et un siège 13 en zone sphérique concave complémentaire ne constitue qu'un mode de réalisation possible. Les concavité et convexité peuvent être inversées, en position ou en sens, sans sortir du cadre de l'invention. En effet, dans l'agencement de la figure 3, le sens de déplacement de la chaîne peut se faire aussi bien dans un sens (par exemple vers la gauche, la calotte sphérique 12 étant menante) que dans l'autre sens (respectivement vers la droite, le siège de la platine 2 étant menant). De même, comme représenté à la figure 5 de façon très schématique, la tête d'accouplement 12 peut être conformée en calotte sphérique concave à concavité tournée vers la platine, tandis que le siège de la platine est convexe, avec les mêmes conditions d'entraînement dans un sens ou dans l'autre que ci-dessus.

## Revendications

1. Dispositif (1) de support de préforme agencé pour être associé avec une multiplicité de dispositifs analogues accouplés avec articulation les uns à la suite des autres en une chaîne sans fin de transfert de préformes avec rotation simultanée de celles-ci sur elles-mêmes, ce dispositif comportant :
- une platine (2) munie de moyens d'accouplement avec articulation avec deux autres platines adjacentes situées respectivement en avant et en arrière (dans le sens (3) de déplacement de la chaîne)
- un corps (4) fixé sur ladite platine (2) ; et
- une tige (5) supportée par ledit corps à libre rotation avec possibilité de déplacement axial, ladite tige ayant une extrémité de préhension (7) conformée pour être solidarisée de façon amovible avec l'extrémité ouverte d'une préforme (8) ;
- les susdits moyens d'accouplement comportant
. à une première extrémité de la platine (2), une queue de liaison (11) supportant une tête d'accouplement (12) en calotte sphérique destinée à prendre appui sur la platine adjacente située du côté de cette première extrémité, et
. à une seconde extrémité, un siège (13) en forme de zone sphérique de forme complémentaire de la susdite calotte et munie d'une ouverture axiale centrale (14) pour le libre passage de la queue de liaison (11) de la platine adjacente située du côté de cette seconde extrémité,
caractérisé en ce que :
- la tête d'accouplement en calotte sphérique est supportée à libre rotation sur la queue de liaison,
- une plaque d'appui (16) est solidarisée, par des moyens de solidarisation, à l'extrémité libre de la queue de liaison (11), cette plaque d'appui (16) s'étendant transversalement à la queue de liaison (11) et sensiblement parallèlement à la face de la tête d'accouplement (12) opposée à sa face en calotte sphérique,
et
- un roulement annulaire (17) est interposé coaxialement à la queue de liaison entre les faces mutuellement en regard de la tête d'accouplement (12) et de la plaque d'appui (16).

2. Dispositif selon la revendication 1, caractérisé en ce que la première extrémité de la platine est son extrémité arrière par rapport au sens de déplacement de la chaîne et la seconde extrémité est son extrémité avant.

3. Dispositif selon la revendication 1, caractérisé en ce que la première extrémité de la platine est son extrémité avant par rapport au sens de déplacement de la chaîne et la seconde extrémité est son extrémité arrière.

4. Dispositif selon l'une quelconque des revendications 1 à 3, caractérisé en ce que les moyens de solidarisation de la plaque d'appui (16) sur la queue de liaison (11) sont agencés en vue d'une retenue axiale de ladite plaque d'appui sur ladite queue de liaison et comprennent :
- un évidement axial (21) de contour polygonal creusé dans la face de la plaque d'appui (16) opposée à celle portant le roulement,
- une gorge radiale (22) creusée au voisinage de l'extrémité libre de la queue de liaison (11), et
- une plaque de retenue (23) constituée en deux parties (23a, 23b) accolées bord à bord le long d'un bord d'assemblage transversal, ladite plaque de retenue (23) présentant un contour extérieur polygonal complémentaire de celui du susdit évidement (21) et possédant un orifice central (24) conformé pour entourer la queue de liaison (11) en étant engagé dans la gorge (22) de celle-ci.

5. Dispositif selon la revendication 4, caractérisé en ce que les moyens de solidarisation de la plaque d'appui (16) sur la queue de liaison (11) sont agencés pour solidariser ladite plaque d'appui en rotation à ladite queue de liaison et en ce qu'à cet effet, la gorge (22) creusée dans la queue de liaison possède un contour polygonal et le contour de l'orifice central (24) de la plaque de retenue (23) est lui aussi polygonal et complémentaire de celui de la gorge (22).

6. Dispositif selon la revendication 5, caractérisé en ce que le contour de la gorge (22) de la queue de liaison (11) est quadrangulaire rectangle.

7. Dispositif selon la revendication 6, caractérisé en ce que le contour de la gorge (22) de la queue de liaison (11) est carré.

8. Dispositif selon l'une quelconque des revendications 4 à 7, caractérisé en ce que la plaque de retenue (23) comporte un évidement axial (25) creusé dans sa face la plus proche de l'extrémité libre de la queue de liaison et conformé pour recevoir l'extrémité de la queue de liaison (11) s'étendant au-delà de la susdite gorge (22).

9. Dispositif selon la revendication 8, caractérisé en ce que l'évidement (25) creusé dans la face de la plaque de retenue (23) a un contour quadrangulaire rectangle.

10. Dispositif selon la revendication 9, caractérisé en ce que ledit évidement (25) a un contour carré.

11. Dispositif selon l'une quelconque des revendications 5 à 10, caractérisé en ce que la face de bout de la queue de liaison (11), la face de la plaque d'appui (16) opposée au roulement et la face de la plaque de retenue (23) la plus proche de l'extrémité libre de la queue de liaison sont approximativement coplanaires.

12. Dispositif selon l'une quelconque des revendications 1 à 11, caractérisé en ce que le roulement annulaire (17) interposé entre la tête d'accouplement (12) et la plaque d'appui (16) comprend deux gorges annulaires (18, 19) face à face creusées respectivement dans les faces mutuellement en regard de la tête d'accouplement (12) et de la plaque d'appui (16), et une multiplicité de billes de roulement (20) logées dans lesdites gorges en étant maintenues approximativement équidistantes les unes des autres.

13. Dispositif selon l'une quelconque des revendications 1 à 12, caractérisé en ce que la tête d'accouplement est en forme de calotte sphérique à convexité tournée vers la platine et en ce que le siège est en forme de zone sphérique concave.

## Claims

1. Preform support device (1) designed to be combined with a multiplicity of similar devices articulately coupled together one after another into an endless chain for transferring preforms with simultaneous rotation of the latter on themselves, this device including:
- a mounting plate (2) provided with means of articulated coupling to two other adjacent mounting plates lying respectively to the front and to the rear (in the direction (3) of movement of the chain);
- a body (4) fixed to said mounting plate (2); and
- a rod (5) supported by said body so as to rotate freely with the possibility of axial movement, said rod having a gripping end (7) shaped in order to be removably fastened to the open end of a preform (8);
- the abovementioned coupling means including
• at a first end of the mounting plate (2), a linking stem (11) supporting a spherical-cap-shaped coupling head (12) intended to bear on the adjacent mounting plate lying on this first end side, and
• at a second end, a seat (13) in the form of a spherical zone having a shape complementary to the abovementioned cap and provided with a central axial opening (14) for the linking stem (11) of the adjacent mounting plate, lying on this second end side, to pass through freely,
characterized in that:
- the spherical-cap-shaped coupling head is supported so as to rotate freely on the linking stem,
- a bearing plate (16) is fastened, by fastening means, to the free end of the linking stem (11), this bearing plate (16) extending transversely to the linking stem (11) and substantially parallel to that face of the coupling head (12) opposite its spherical-cap-shaped face,
and
- an annular rolling bearing (17) is interposed coaxially with the linking stem between the mutually facing faces of the coupling head (12) and of the bearing plate (16).

2. Device according to claim 1, characterized in that the first end of the mounting plate is its rear end with respect to the direction of movement of the chain and the second end is its front end.

3. Device according to claim 1, characterized in that the first end of the mounting plate is its front end with respect to the direction of movement of the chain and the second end is its rear end.

4. Device according to any one of claims 1 to 3, characterized in that the means for fastening the bearing plate (16) onto the linking stem (11) are designed for the purpose of retaining said bearing plate axially on said linking stem and comprise:
- an axial recess (21) of polygonal contour cut out in that face of the bearing plate (16) opposite that carrying the rolling bearing,
- a radial groove (22) cut out in the vicinity of the free end of the linking stem (11), and
- a retaining plate (23) consisting of two parts (23a, 23b) joined together edge to edge along a transverse assembly edge, said retaining plate (23) having a polygonal external contour complementary with that of the abovementioned recess (21) and possessing a central orifice (24) shaped to surround the linking stem (11), being engaged in the groove (22) of the latter.

5. Device according to claim 4, characterized in that the means of fastening the bearing plate (16) to the linking stem (11) are designed for fastening said bearing plate rotationally to said linking stem and in that, for this purpose, the groove (22) cut out in the linking stem possesses a polygonal contour and the contour of the central orifice (24) of the retaining plate (23) is itself also polygonal and complementary to that of the groove (22).

6. Device according to claim 5, characterized in that the contour of the groove (22) of the linking stem (11) is right-quadrangular.

7. Device according to claim 6, characterized in that the contour of the groove (22) of the linking stem (11) is square.

8. Device according to any one of claims 4 to 7, characterized in that the retaining plate (23) includes an axial recess (25) cut out in its face closest to the free end of the linking stem and shaped to accommodate the end of the linking stem (11) extending beyond the abovementioned groove (22).

9. Device according to claim 8, characterized in that the recess (25) cut out in the face of the retaining plate (23) has a right-quadrangular contour.

10. Device according to claim 9, characterized in that said recess (25) has a square contour.

11. Device according to any one of claims 5 to 10, characterized in that the end face of the linking stem (11), that face of the bearing plate (16) opposite the rolling bearing and that face of the retaining plate (23) closest to the free end of the linking stem are approximately coplanar.

12. Device according to any one of claims 1 to 11, characterized in that the annular rolling bearing (17) interposed between the coupling head (12) and the bearing plate (16) comprises two annular grooves (18, 19) facing each other, cut out respectively in the mutually facing faces of the coupling head (12) and of the bearing plate (16), and a multiplicity of rolling-bearing balls (20) housed in said grooves being maintained approximately equidistant from one another.

13. Device according to any one of claims 1 to 12, characterized in that the coupling head is in the form of a spherical cap with its convexity facing the mounting plate and in that the seat is in the form of a concave spherical zone.

## Patentansprüche

1. Vorrichtung (1) zum Halten eines Vorformlings, die derart ausgebildet ist, daß sie mit einer Mehrzahl von entsprechenden Vorrichtungen verbunden ist, die gelenkig hintereinander zu einer Endloskette zusammengekoppelt sind, um die Vorformlinge unter gleichzeitiger Drehung derselben auf sich zu überführen, wobei diese Vorrichtung umfaßt:
- eine Grundplatte (2), die mit Elementen zur gelenkigen Ankopplung mit zwei weiteren angrenzenden jeweils vorne und hinten (in Verschiebungsrichtung (3) der Kette) liegenden Grundplatten versehen ist;
- einen Körper (4), der auf der Grundplatte (2) befestigt ist; und
- einen Schaft (5), der von dem Körper freidrehend mit der Möglichkeit einer axialen Verschiebung gehalten wird, wobei der Schaft ein Greifende (7) aufweist, das derart ausgebildet ist, daß dieses in lösbarer Weise mit dem offenen Ende eines Vorformlings (8) fest verbunden werden kann;
- die vorgenannten Kopplungselemente umfassen
- an einem ersten Ende der Grundplatte (2) ein Verbindungsstück (11), das einen Kopplungskopf (12) in Form einer Kugelkappe trägt, der dazu bestimmt ist, an der auf der Seite des ersten Endes angrenzenden Grundplatte anzuliegen, und
- an einem zweiten Ende einen Sitz (13) in Form einer sphärischen Zone komplementär zu der Form der vorgenannten Kappe und versehen mit einer axialen Zentralöffnung (14) für den freien Durchgang des Verbindungsstücks (11) der auf der Seite dieses zweiten Endes angrenzenden Grundplatte,
dadurch gekennzeichnet, daß:
- der Kopplungskopf in Form einer Kugelkappe auf dem Verbindungsstück frei drehend abgestützt ist,
- eine Lagerplatte (16) mit Verbindungsmitteln an dem freien Ende des Verbindungsstücks (11) befestigt ist, wobei sich diese Lagerplatte (16) quer zu dem Verbindungsstück (11) und im wesentlichen parallel zu der Fläche des Kopplungskopfes (12), die seiner sphärischen Kappenfläche entgegengesetzt liegt, erstreckt,
und
- ein ringförmiges Kugellager (17) koaxial zu dem Verbindungsstück zwischen den sich gegenüberliegenden Flächen mit Bezug zum Kopplungskopf (12) und zur Lagerplatte (16) angeordnet ist.

2. Vorrichtung nach Anspruch 1, dadurch gekennzeichnet, daß das erste Ende der Grundplatte ihr hinteres Ende in bezug zur Verschiebungsrichtung der Kette ist und das zweite Ende ihr vorderes Ende ist.

3. Vorrichtung nach Anspruch 1, dadurch gekennzeichnet, daß das erste Ende der Grundplatte ihr vorderes Ende in bezug zur Verschiebungsrichtung der Kette ist und das zweite Ende ihr hinteres Ende ist.

4. Vorrichtung nach einem der Ansprüche 1 bis 3, dadurch gekennzeichnet, daß die Mittel zur Verbindung der Lagerplatte (16) mit dem Verbindungsstück (11) im Hinblick auf eine axiale Haltung der Lagerplatte auf dem Verbindungsstück ausgebildet sind und umfassen:
- eine axiale Aussparung (21) mit einer ausgetieften polygonalen Kontur in der Fläche der Lagerplatte (16), die derjenigen entgegengesetzt ist, die das Kugellager trägt,
- eine radiale Hohlkehle (22) in der Nähe des freien Endes des Verbindungsstücks (11), und
- eine Halteplatte (23), die aus zwei Teilen (23a, 23b) gebildet ist, die Seite an Seite längs eines Querrandes der Baueinheit angefügt sind, wobei die Halteplatte (23) eine polygonale Außenkontur aufweist, die derjenigen der vorgenannten Aussparung (21) komplementär ist und eine zentrale Öffnung (24) besitzt, die derart ausgebildet ist, daß das Verbindungsstück (11) umschlossen ist, wenn dieses in die Hohlkehle (22) derselben eingreift.

5. Vorrichtung nach Anspruch 4, dadurch gekennzeichnet, daß die Mittel zur Verbindung der Lagerplatte (16) mit dem Verbindungsstück (11) derart ausgebildet sind, daß sie die Lagerplatte drehbar an dem Verbindungsstück festlegen, und daß zu diesem Zweck die Hohlkehle (22) in dem Verbindungsstück eine polygonale Kontur besitzt und die Kontur der Zentralöffnung (24) der Halteplatte (23) selbst auch polygonal und komplementär zu derjenigen der Hohlkehle (22) ist.

6. Vorrichtung nach Anspruch 5, dadurch gekennzeichnet, daß die Kontur der Hohlkehle (22) des Verbindungsstücks (11) viereckig rechtwinklig ist.

7. Vorrichtung nach Anspruch 6, dadurch gekennzeichnet, daß die Kontur der Hohlkehle (22) des Verbindungsstücks (11) quadratisch ist.

8. Vorrichtung nach einem der Ansprüche 4 bis 7, dadurch gekennzeichnet, daß die Halteplatte (23) eine axiale Aussparung (25) umfaßt, die in ihrer dem freien Ende des Verbindungsstücks am nächsten liegenden Fläche ausgetieft ist und derart ausgebildet ist, daß sie das Ende des Verbindungsstücks (11) aufnehmen kann, das sich über die vorgenannten Hohlkehle (22) hinaus erstreckt.

9. Vorrichtung nach Anspruch 8, dadurch gekennzeichnet, daß die Aussparung (25), die in der Fläche der Halteplatte (23) ausgebildet ist, eine viereckig rechtwinklige Kontur aufweist.

10. Vorrichtung nach Anspruch 9, dadurch gekennzeichnet, daß die Aussparung eine quadratische Kontur aufweist.

11. Vorrichtung nach einem der Ansprüche 5 bis 10, dadurch gekennzeichnet, daß die Stirnfläche des Verbindungsstücks (11), die Fläche der Lagerplatte (16), die dem Kugellager entgegengesetzt liegt, und die Fläche der Halteplatte (23), die dem freien Ende des Verbindungsstücks am nächsten liegt, in etwa koplanar sind.

12. Vorrichtung nach einem der Ansprüche 1 bis 11, dadurch gekennzeichnet, daß das ringförmige Kugellager (17), das zwischen dem Kopplungskopf (12) und der Lagerplatte (16) angeordnet ist, umfaßt zwei ringförmige Vertiefungen (18, 19), die sich jeweils gegenüberliegend in den sich gegenüberliegenden Flächen des Kopplungskopfes (12) und der Lagerplatte (16) ausgetieft sind, und eine Mehrzahl von Lagerkugeln (20), die in den Vertiefungen unter Beibehaltung von etwa gleichen Abständen untereinander angeordnet sind.

13. Vorrichtung nach einem der Ansprüche 1 bis 12, dadurch gekennzeichnet, daß der Kopplungskopf in Form einer Kugelkappe mit einer zur Grundplatte hin gerichteten Konvexität vorliegt, und daß der Sitz in Form einer sphärisch konkaven Zone vorliegt.
